# EUROPÄISCHE PATENTSCHRIFT

(11) **EP 1 997 093 B1**
(45) Veröffentlichungstag und Bekanntmachung des Hinweises auf die Patenterteilung: **13.07.2011**
(21) Anmeldenummer: 07723183.5
(22) Anmeldetag: 12.03.2007
(51) Int. Cl.: G08G 1/16, G06K 9/00, G06T 5/00

(54) **VIRTUELLES SPOTLIGHT ZUR KENNZEICHNUNG VON INTERESSIERENDEN OBJEKTEN IN BILDDATEN**
VIRTUAL SPOTLIGHT FOR DISTINGUISHING OBJECTS OF INTEREST IN IMAGE DATA
PROJECTEUR DE LUMIÈRE VIRTUEL POUR RECONNAÎTRE DES OBJETS INTÉRESSANTS DANS DES DONNÉES D'IMAGE

(30) Priorität: 17.03.2006 DE 102006012773; 06.10.2006 DE 102006047777
(43) Veröffentlichungstag der Anmeldung: 03.12.2008
(73) Patentinhaber: Daimler AG, 70327 Stuttgart (DE)
(72) Erfinder: EGGERS, Helmuth, 71063 Sindelfingen (DE); HAHN, Stefan, 89075 Ulm (DE); KURZ, Gerhard, 73240 Wendlingen (DE); LÖHLEIN, Otto, 89171 Illerkirchberg (DE); OBERLÄNDER, Matthias, 89075 Ulm (DE); RITTER, Werner, 89081 Ulm (DE); SCHWEIGER, Roland, 89075 Ulm (DE)
(74) Vertreter: JENSEN & SON
(86) Internationale Anmeldenummer: PCT/EP2007/002134
(87) Internationale Veröffentlichungsnummer: WO 2007/107259

(56) Entgegenhaltungen:
- EP-A- 1 158 464
- EP-A- 1 407 931
- EP-A- 1 617 371
- DE-C1- 10 203 421

## Beschreibung

Die Erfindung betrifft ein Verfahren zur Hervorhebung von Objekten in Bilddaten, sowie eine hierfür geeignete Bildanzeige nach dem Oberbegriff der Patentansprüche 1 und 27.

Zur Unterstützung von Fahrzeuglenkern bei der Führung ihrer Fahrzeuge kommen zunehmend Assistenzsysteme zur Verwendung, welche mittels Kamerasystemen Bilddaten der Umgebung um das Fahrzeug erfassen und diese auf einem Display zur Anzeige bringen. Insbesondere zur Unterstützung von Fahrzeugführern bei Nachtfahrten sind so genannte Nachtsichtsysteme bekannt, welche den durch den Fahrzeugführer einsehbaren Bereich über den mit Hilfe des Abblendlichtes einsehbaren Bereich hinaus signifikant weitern. Hierbei werden von der Umgebung Bilddaten im infra-roten Wellenlängenbereich erfasst und dem Fahrer dargestellt. Da diese aus dem infra-roten Wellenlängenbereich stammenden Bilddaten durch ihr ungewöhnliches Erscheinungsbild einem Fahrzeugführer nicht unmittelbar zugänglich ist, bietet es sich an diese Bilddaten vor deren Präsentation mittels Bildverarbeitungssystemen aufzubereiten.

Um die Aufmerksamkeit eines Fahrers auf einen Fußgänger zu lenken wird in der deutschen Offenlegungsschrift DE 101 31 720 A1 beschrieben über ein Headup-Display im Sichtbereich des Fahrers an der Stelle, an welcher sich ein im Fahrzeugumfeld befindlicher Fußgänger abbildet eine symbolische Darstellung desselben einzublenden. Um diesen besonders hervorzuheben wird zudem vorgeschlagen, einen Rahmen um die symbolische Darstellung herum einzublenden.

Um Verdeckungen relevanter Details durch eine symbolische Überlagerung der Bildinformation zu vermeiden, ist es jedoch auch denkbar, die Bilddaten relevanter Objekte vor deren Darstellung mittels Bildverarbeitung zu manipulieren. So wird in der deutschen Offenlegungsschrift
DE 10 2004 034 532 A1 vorgeschlagen relevante Objekte durch Manipulation der Bilddaten hinsichtlich einer Aufhellung oder Einfärbung der resultierenden Bilddarstellung hervorzuheben. Ergänzend beschreibt die deutsche Offenlegungsschrift
DE 10 2004 028 324 A1 die Hervorhebung von Objekten, insbesondere von Lebewesen, in den Bilddaten durch Verstärkung der Kontur.

Um die Unterscheidbarkeit derart in den Bilddaten hervorgehobenen Objekte noch zu verstärken, wird in der deutschen Offenlegungsschrift DE 102 59 882 A1 zusätzlich vorgeschlagen die Objekte vor der Farbmanipulation der Bilddaten einer Typklassifikation zu unterziehen und ausgehend hiervon die Einfärbung typ-spezifisch vorzunehmen.
In der EP 1 158 464 A1 wird ein Verfahren zur automatischen Abschnittsvergrößerung beschrieben, welches dazu dient, in einzelnen digitalisierten Photoaufnahmen unrelevante Bildinhalte abzuschneiden und relevante Bildinhalte zu vergrößern, sodass die digitalisierten Photoaufnahmen vollständig durch die relevanten Bildinhalte ausgefüllt werden. Dabei ist es bekannt, nicht relevante Bildinhalte so abzuschneiden, dass relevante Bildinhalte eine ovale, herzförmige oder quadratsche Umrisslinie erhalten.
EP 1 407 931 A1 offenbart ein Fahrerassistenzsystem bei welchem die Fahrzeugumgebung von einer Nachtsicht-Kamera erfasst wird. In erfassten Umgebungsbildern wird eine Objekterkennung durchgeführt, um damit Gefährdungsobjekte, wie z.B. Fußgänger und Tiere, zu identifizieren. Auf einer Bildanzeige werden dem Fahrer die erfassten Umgebungsbilder angezeigt, wobei Gefährdungsobjekte augenfälliger dargestellt werden als solche Objekte, welche nicht gefährdungs- oder kollisionsrelevant sind. Die Augenfälligkeit wird hierbei durch eine graphische Hervorhebung, durch eine geeignete Farbe, Helligkeit, Kontrast, durch zusätzliche Symbole bzw. Markierungen oder durch eine Animation erreicht.

Aufgabe der Erfindung ist es, ein Verfahren und eine zur Durchführung des Verfahrens geeignete Bildanzeige zu finden, mit denen eine Hervorhebung relevanter Objekte in Bilddaten weiter verbessert werden kann.

Die Erfindung wird durch ein Verfahren und eine zur Durchführung des Verfahrens geeignete Bildanzeige mit den Merkmalen der Patentansprüche 1 und 27 gelöst. Vorteilhafte Weiterbildungen und Ausgestaltungen der Erfindung werden mit den Unteransprüchen beschrieben.

Bei dem Verfahren zur Bildanzeige werden mittels einer Kamera Bilddaten aus dem Umfeld eines Fahrzeuges aufgenommen, und die Bilddaten (1) nach einer Objekterkennung und Bildverarbeitung zumindest teilweise auf einer Anzeige dargestellt. Nach der Aufnahme der Bilddaten durch die Kamera werden diese mittels einer Objekterkennung verarbeitet, um Objekte (2, 3, 4, 5) in den aufgenommenen Bilddaten zu erkennen. Die so erkannten Objekte (2, 3, 4, 5) werden zumindest teilweise bei der Darstellung der Bilddaten (1) auf der Anzeige hervorgehoben. In erfinderischer Weise erfolgt dabei die Hervorhebung der erkannten Objekte (2, 3, 4,5) dergestalt, dass die darzustellenden Bilddaten (1) in zwei Arten von Bereichen eingeteilt werden. Hierbei umfasst die erste Art von Bereichen die erkannten und hervorzuhebenden Objekte (2, 3, 4, 5) und einen sich jeweils entsprechend direkt daran anschließenden Umgebungsbereich (2a,3a,4a). Die zweite Art von Bereichen umfasst sodann diejenigen Bilddaten (1), welche nicht der ersten Art von Bereichen zugeordnet wurden. Die Hervorhebung der Objekte in den Bilddaten (1) erfolgt sodann derart, dass die Bilddaten der beiden Arten von Bereichen in unterschiedlicher Weise manipuliert werden.

Im Gegensatz zum Stand der Technik, bei welchem die Bilddaten der hervorzuhebenden Objekte entweder durch symbolische Darstellungen ersetzt werden oder aber speziell die dem Objekt direkt zuordenbaren Bilddaten manipuliert (Kontrastverbesserung oder Farbänderung) wird nun in besonders vorteilhafter Weise eine Hervorhebung der Objekte (2,3,4,5) dadurch erreicht, dass nicht nur das Objekt als solches, sonder zusätzlich noch der sich direkt daran anschließende Bildbereich hervorgehoben wird. Durch diese Kombination entsteht ein Bildbereich erster Art, welcher in erfinderischer Weise nachfolgend einheitlich behandelt wird. Durch gemeinsame Behandlung eines Objektes mit dem sich daran anschließenden direkten Umgebungsbereich ergibt sich in gewinnbringender Weise für den Betrachter der Bildanzeige durch die Hervorhebung in den Bilddaten der Eindruck einer virtuellen Beleuchtung des Objektes und seiner direkten Umgebung (Taschenlampeneffekt). So wird, insbesondere innerhalb von Nachtszenen, eine äußerst intuitive Wahrnehmbarkeit der hervorzuhebenden Objekte geschaffen.

Ein weitere Vorteil ergibt sich daraus, dass in den durch die Kamera aufgenommenen Bilddaten zwar die relevanten, hervorzuhebenden Objekte erkannt werden müssen, deren Objektkontur jedoch nicht exakt ermittelt zu werden brauchen. Dies deshalb, da die Bildbereiche der ersten Art zusätzlich zu den Objekten noch deren direkter Umgebungsbereich zugeordnet wird. Bei geeigneter Dimensionierung dieser direkten Umgebungsbereiche wird im allgemeinen erreicht, dass die Objekte auch dann in ihrer vollen Ausdehnung Hervorgehoben werden, wenn der Objekterkennungsalgorithmus der Bildverarbeitung das Objekt nicht in seinen gesamten Ausmaßen aus der Bildszene extrahieren konnte; dies ist insbesondere bei komplexen Objekten, wie Fußgängern, in schwach beleuchteten Szenen mit schlechtem Bildkontrast häufig der Fall.

Nachfolgend wird die Erfindung mit Hilfe von Figuren im Detail erläutert. Hierbei zeigt
- Figur 1: eine Verkehrsszene vor einem Fahrzeug,
- Figur 2: die Bilddaten (1) der Verkehrsszene aus Figur 1, nach erfolgter Objekterkennung und Hervorhebung der Fußgänger (2,3) enthaltenden Bildbereiche erster Art,
- Figur 3: die Bilddaten (1) der Verkehrsszene aus Figur 1, nach erfolgter Objekterkennung und Hervorhebung der Fußgänger (2,3) enthaltenden Bildbereiche erster Art, sowie Fahrzeuge (4,5) umfassende Bildbereiche dritter Art,
- Figur 4: die Bilddaten (1) der Verkehrsszene aus Figur 1, nach erfolgter Objekterkennung und Hervorhebung der Fußgänger (2,3) enthaltenden Bildbereiche erster Art, sowie eines weiteren das vorausfahrende Fahrzeug (4) enthaltenden Bildbereichs erster Art.

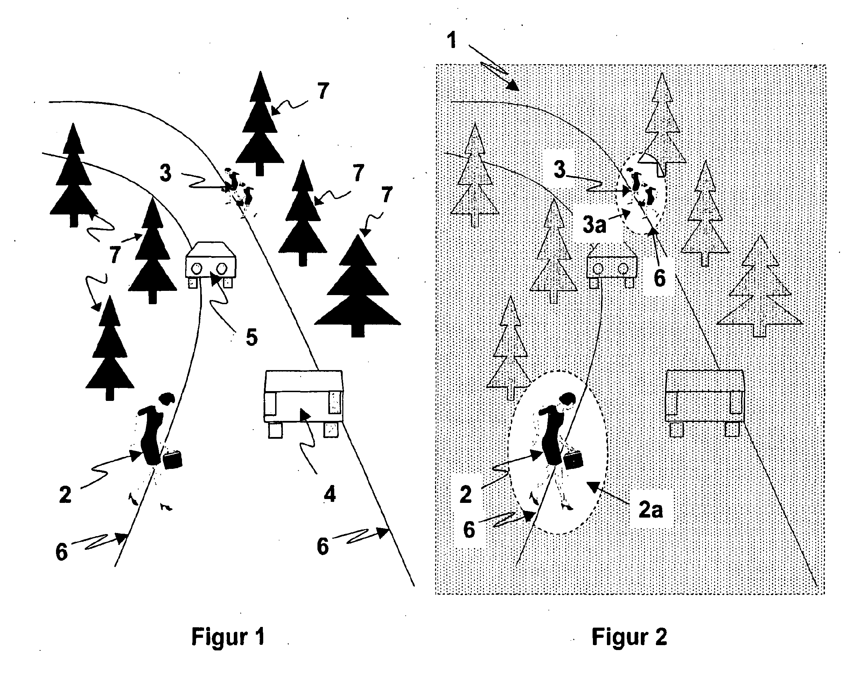

In der Figur 1 ist eine typische Verkehrsszene vor einem Kraftfahrzeug dargestellt, wie sie von dem Führer eines Fahrzeuges beim Blick durch die Windschutzscheibe beobachtet werden kann, bzw. wie sie von der dem erfindungsgemäßen Bildverarbeitungssystem zugeordneten Kamera erfasst werden kann. Die Verkehrsszene umfasst eine Straße, welche Fahrbahnbegrenzungen (6) aufweist. Entlang des Verlaufs der Straße finden sich in dessen Umgebung eine Mehrzahl von Bäumen (7). Auf dieser Straße befindet sich auf der Fahrbahn vor dem eigenen Fahrzeug ein vorausfahrendes bzw. parkendes Fahrzeug (4), während sich auf der gegenüberliegenden Fahrspur ein dem eigenen Fahrzeug entgegenkommendes Fahrzeug (5) befindet. Des Weiteren umfasst die Verkehrsszene eine sich im Szenenvordergrund von links auf die Fahrbahn bewegende Person (2), sowie eine sich in weiterer Entfernung, im Bereich der Baumgruppen von rechts auf die Fahrbahn bewegende Personengruppe (3). Die Beobachtung dieser Verkehrsszene durch den Fahrzeugführer erfordert ein hohes Maß an Aufmerksamkeit, da eine Vielzahl von unterschiedlichen Objekten wahrnehmen und beobachten muss; dies ist beispielsweise bei der sich in weiterer Entfernung, im Bereich der Bäume (7) befindlichen Personengruppe (3) schon recht beanspruchend. Zusätzlich ist der Fahrzeugführer jedoch auch gefordert, die Objekte in Abhängigkeit ihrer Position und Bewegung relativ zum eigenen Fahrzeug in ihrer Gefährdungsrelevanz einzuschätzen.

Um den Fahrzeugführer bei dieser Aufgabe zu entlasten, bietet es sich deshalb an, die Verkehrszene mittels eines Kamerasystems zu erfassen und die so gewonnen Bilddaten zu verarbeiten und aufzubereiten, so dass diese auf einer Anzeige dargestellt, die Erfassung der Verkehrsszene erleichtern. Hierbei bietet es sich die besonders zu beachtenden Objekte in den Bilddäten zu selektieren und im Rahmen der Darstellung hervorgehoben zur Anzeige zu bringen. Derartig aufbereitete Bilddaten (1) der in der Figur 1 dargestellten Verkehrsszene werden in der Figur 2 gezeigt. Die aus der Verkehrsszene mittels einer Kamera gewonnen Bilddaten wurden hierbei einer Objektklassifikation unterzogen, mittels welcher in der Verkehrsszene enthaltene Fußgänger (2,3) erkannt wurden, so dass diese in den Dargestellten Bilddaten gemeinsam mit deren direkten Umgebungsbereichen (2a,3a) hervorgehoben dargestellt werden konnten.

Selbstverständlich kann die Objektklassifikation je nach Anwendungsgebiet und -zweck auf die Erkennung weiterer oder anderer Objekte ausgerichtet werden. So wäre es denkbar zusätzlich zu den Fußgängern auch auf der Fahrbahn befindliche Fahrzeuge zu erkennen; im Rahmen andere Einsatzgebiete könnte es sich bei den zu erkennenden Objekten aber auch um Verkehrszeichen oder Fußgängerüberwege handeln. Andererseits kann die Objekterkennung bzw. -klassifikation auch so ausgestaltet werden, dass die Bewegungsrichtungen und -geschwindigkeiten der Objekte mit betrachtet wird, so dass beispielsweise eine sich in weiterer Entfernung befindliche, von der Fahrbahn wegbewegende Person nicht mehr ausgewählt und bei der Darstellung hervorgehoben wird.

Wie in der Figur 2 deutlich aufgezeigt wird den Die mittels der Objektklassifikation erkannten und im Rahmen der Darstellung hervorzuhebenden Objekten (2,3) jeweils deren direkter Umgebungsbereich (2a, 3a) zugeordnet, so dass sich zwei Bereiche der ersten Art ergeben, welche sodann unterschiedlich zu den verbleibenden Bilddaten (Bildbereiche der zweiten Art) behandelt bzw. manipuliert werden, um deren Hervorhebung zu erreichen.

Um bei der Darstellung der Bilddaten eine Hervorhebung der Bildbereiche erster Art zu erreichen ist es nun zum einen möglich die diesen Bildbereichen zugeordneten Bilddaten aufzuhellen. Andererseits kann eine Hervorhebung der Bildbereiche der ersten Art jedoch auch dadurch erzielt werden, indem die Bildbereiche der zweiten Art in ihrer Intensität abgesenkt werden. Dies entspricht den in der Figur 2 schematisch dargestellten Bilddaten (1). Beim Verglich mit den Intensitäten aus der in der Figur 1 dargestellten Verkehrsszene ist zu erkennen, dass die Objekte (2,3) und der diese direkt umgebende Bildbereich (2a,3a) in ihrer Intensität konstant gehalten wurden, während die anderen Bildbereiche in ihrer Intensität und somit Wahrnehmbarkeit deutlich abgesenkt wurde. Hierdurch ergibt sich eine Hervorhebung der Bildbereiche erster Art quasi dadurch, dass über die verbleibenden Bildbereiche eine Art dunkler Schleier gelegt wird. In Abhängigkeit des jeweiligen Anwendungsgebietes und -zwecks kann es sich jedoch in gewinnbringender Weise anbieten, gleichzeitig sowohl die Bildbereiche erster Art aufzuhellen als auch die Bildbereiche zweiter Art in ihrer Intensität abzusenken.

Aus der Figur 2 ist weiter ersichtlich, dass sich durch die zusätzliche Hervorhebung des die relevanten Objekte (2,3) direkt umgebenden Bereichs (2a,3a) in besonders vorteilhafter Weise auch eine Hervorhebung anderer zu Beurteilung der Verkehrsszene hilfreicher Detailinformation ergibt; hier die Anzeige des Straßenrandes in dem hervorgehobenen Bildbereich der ersten Art. Wird wie im Stand der Technik beschrieben nur das Objekt (2,3) selbst aus den Bilddaten hervorgehoben, so treten gerade dies zur Beurteilung der Verkehrssituation ebenfalls wichtigen Umgebungsdetails eben gerade in den Hintergrund, so dass sich hier eine zusätzliche Erschwerung der Wahrnehmung durch den Fahrzeugführer ergibt.

Die Wahrnehmbarkeit der dem Fahrzeugführer mittels der Bildanzeige dargestellten manipulierten Bilddaten (1) der Verkehrsszene lässt sich auch dadurch erreichen, dass alternativ oder ergänzend zu einer Abdunklung der Bildbereiche der zweite Art diese Bildbereiche zumindest in Teilen vereinfacht, beispielsweise mit reduziertem Kontrast oder schematisch, beispielsweise durch Überlagerung mit einer Textur oder aber symbolisch dargestellt werden. Dies macht insbesondere für Teilbereiche Sinn, welche sich in weiterer Entfernung von der Fahrbahn befinden und so für eine Abschätzung von Gefahrenpotential durch den Fahrzeugführer ohnehin irrelevant sind.

Im Rahmen der Manipulation der Bilddaten können die Bildbereiche der zweiten Art auch vereinfacht werden, indem die Bildschärfe und/oder die Intensität in diesen Bildbereichen angepasst werden. Durch die Anpassung der Bildschärfe und/oder der Intensität wird in einer gewinnbringenden Weise die Information in den Bildbereichen der zweiten Art reduziert. Der Bildkontrast bleibt hierbei vorzugsweise unverändert. In diesem Zusammenhang sind beispielsweise aus der digitalen Bildverarbeitung auch weitere Verfahren zur Anpassung der Bildinformationen, wie z.B. das sog. Tone-Mappingverfahren oder Kontrast-Maskierungsverfahren, bereits bekannt.

Weiterhin besteht die Möglichkeit, dass die Bilddaten der Bildbereiche der zweiten Art in ihrer Farbe manipuliert werden und/oder dass sie in ihren Farb-oder Helligkeitsverläufen mit weichem Übergang, ohne harte Grenzen zu den Bildbereichen der ersten Art angezeigt werden. Durch eine derartige Einfärbung unterscheiden sich die nicht interessierenden Bereiche zweiter Art von den interessierenden Objekten in den Bereichen erster Art deutlich, wodurch der Benutzer die in den Bilddaten enthaltenen Objekte schnell und auf eine besonders zuverlässige Weise erkennen kann.

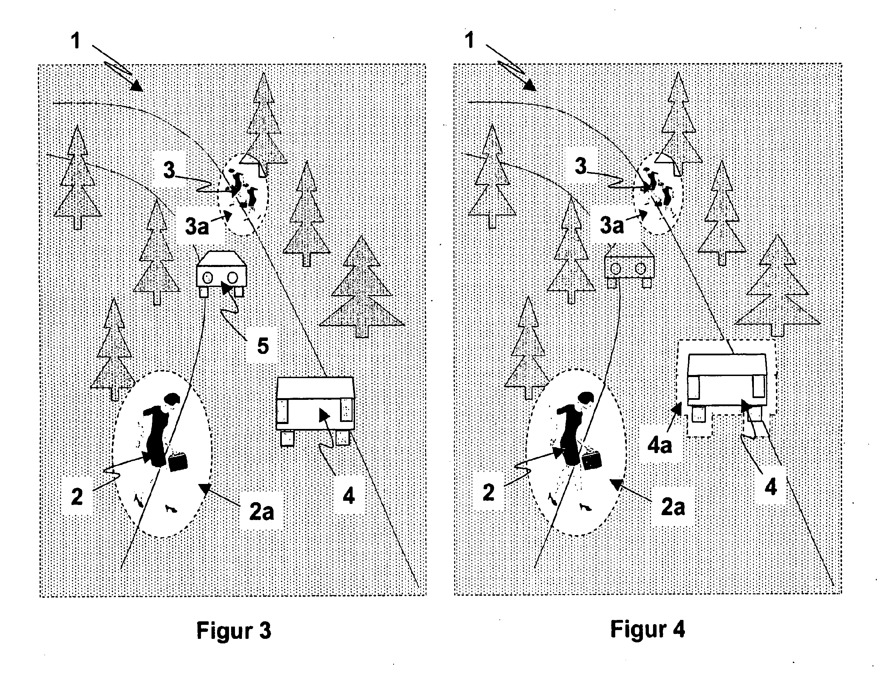

In der Figur 3 ist eine weitere besonders vorteilhafte Ausgestaltung der Erfindung aufgezeigt. Hierin wurden die Bilddaten aus den Bildbereichen der zweiten Art, welche weiteren erkannten Objekten (4,5) zuzuordnen sind, einer dritten Art von Bereichen zugeordnet. Wie hier aufgezeigt, kann es sich bei den weiteren Objekten beispielsweise um Fahrzeuge (4,5) handeln. So kann eine primär auf die Visualisierung von Fußgängern (2,3) spezifizierte Bilddarstellung, weiter verbessert werden, indem zusätzlich auch andere Objekte, hier Fahrzeuge, erkannt und gesondert in Bildbereichen dritter Art dargestellt werden können. Wie in der Figur 3 gezeigt, werden neben den hervorgehobenen Bildbereichen erster Art zusätzlich auch noch die in den Bildbereichen dritter Art enthaltenen Fahrzeuge (4,5) dargestellt. Es wird so möglich, neben den hervorzuhebenden Objekten in den Bildbereichen der ersten Art auch noch weitere gegebenenfalls relevante Objekte auf der Bildanzeige deutlich darzustellen. Hierbei bietet es sich jedoch an, insbesondere um den Effekt der Hervorhebung die Bilddaten der Objekte in den Bildbereichen der ersten Art nicht unnötig abzuschwächen, die Objekte in den Bildbereichen der dritten Art in anderer Weise zu manipulieren. In einer bevorzugten Ausgestaltung bei der die Bildbereiche der ersten Art aufgehellt werden und die Bildbereiche der zweiten Art in ihrer Intensität abgesenkt werden, könnten die Bildbereiche der dritten Art mit der durch die Kamera ursprünglich erfassten Intensität abgebildet werden, so dass sich eine leicht wahrnehmbare dreistufige Intensitätsgruppierung im Bild ergibt.

Auch besteht die Möglichkeit, dass die Bilddaten der Bildbereiche der dritten Art in ihrer Farbe manipuliert werden und/oder dass sie in ihren Farb- oder Helligkeitsverläufen mit weichem Übergang, ohne harte Grenzen zu den Bildbereichen der ersten Art und/oder der zweiten Art angezeigt werden. Dabei bietet es sich an, die Farbe derart zu wählen, sodass sich die Bildbereiche einerseits deutlich von den Bildbereichen zweiter Art abheben und andererseits die Hervorhebung der Bilddaten der Objekte in den Bildbereichen der ersten Art nicht unnötig abgeschwächt werden.

Als vorteilhafte Alternative zu der direkten Manipulation der den Bildbereichen der ersten Art zuzuordnenden Bilddaten im Sinne einer Aufhellung oder ähnlichem ist es sehr wohl auch denkbar auf die Daten anderer Sensoren oder Sensorströme zurückzugreifen und mit diesen die ursprünglich von der Kamera des Bildanzeigesystems gelieferten Bilddaten zu ersetzen. So könnten beispielsweise die Bilddaten einer Infrarot-Kamera teilweise durch die Bilddaten einer ebenfalls im Fahrzeug befindlichen Farbkamera ersetzt werden. Dies kann vor allem dann von großem Vorteil sein, wenn es sich bei den hervorzuhebenden Objekten um Ampelanlagen handelt. Hier könnten in die ,schwarz-weiß' Daten der Infrarot-Kamera die Hervorhebung der Ampeln durch Ersetzung der Bilddaten in den Bildbereichen erster Art durch farbige Bildinformation einer Farbkamera erfolgen. Da die Bildbereiche erster Art sowohl die relevanten Objekte (hier Ampeln) als auch deren direkte Umgebung enthalten, ist es nicht besonders kritisch, wenn sich auf Grund von Paralaxenfehlern zwischen den beiden Kamerasystemen an den Übergängen zwischen den Bildbereichen erster Art und den-Bildbereichen zweiter Art Sprünge bzw. Verzerrungen in der Bilddarstellung der Verkehrsszene ergeben. Alternativ wäre es beispielsweise sehr wohl auch denkbar einen Bildbereich erster Art in einem Infrarot-Bild durch eine aufgearbeitete Information eines Radarsystems, insbesondere eines hochauflösenden (bildgebenden) Radarsystems, zu ersetzen.

In besonderer Weise ist es auch denkbar der Bildanzeige eine Kamera zuzuordnen welche Bildinformation sowohl im visuellen als auch im
infraroten Wellenlängenbereich, insbesondere im nahen infraroten Wellenlängenbereich, erfasst. Hierbei ist es dann auch denkbar, dass diese Kamera Bilddaten aus gewichteten Anteilen des sichtbaren und des infra-roten Wellenlängenbereichs erfasst oder dass die von der Kamera erfassten Bilddaten im nachhinein einer Gewichtung unterzogen werden; so könnten beispielsweise die Bilddaten im visuellen blau/grünen Bereich abgeschwächt werden.

Der Bilddarstellung in der Figur 4 liegt eine, bereits zuvor beschriebene, spezielle Ausgestaltung der Objekterkennung zugrunde. Hierbei wurden mittels der Objekterkennung zum einen Personen (2,3) als auch ein sich direkt vor dem eigenen Fahrzeug befindliches anderes Objekt (5), hier ebenfalls ein Fahrzeug, als hervorzuhebende Objekte ausgewählt. Aus der Figur 4 geht hervor, dass der in den Bildbereichen der ersten Art den Objekten (2, 3, 4, 5) jeweils zugeordnete Umgebungsbereich (2a,3a,4a) in der Form seines seinem Umrisses unterschiedlich gewählt werden kann. So weisen die Umgebungsbereiche 2a und 3a einen elliptisch geformten Umriss auf, während der dem Fahrzeug 4 zugeordnete direkte Umgebungsbereich (4a) in seinem Umriss im Wesentlichen der Objektform angepasst ist. Selbstverständlich sind anwendungs-spezifisch jegliche andere Arten von Umrissen denkbar, insbesondere runde oder rechteckige.

Es ist auch denkbar zur Hervorhebung der in der Verkehrsszene enthaltenen relevanten Objekte die Bilddaten der Bildbereiche der ersten Art in ihrer Farbe zu manipulieren. Hierbei kann es sich zum einen um eine einfache Einfärbung, insbesondere hin zu gelben oder roten Farbtönen handeln. Zum anderen ist es aber sehr wohl möglich die Farb- oder Helligkeitsverläufen der Bilddaten so zugestalten, dass sich entweder weicher Übergang, ohne harte Grenzen zu den Bildbereichen der zweiten Art ergibt. Eine derartige Manipulation der Bilddaten bietet sich insbesondere bei Bildbereichen der ersten Art an, bei welchen die Bilddaten von anderen Sensoren oder Sensorströmen abgeleitet wurden.

Besonders deutlich werden die Bildbereiche der ersten Art in den Bilddaten (1) dann hervorgehoben, wenn diese Bildbereiche blinkend oder pulsierend dargestellt werden. Hierbei ist es denkbar die Frequenz des Blinkens oder Pulsierens in Abhängigkeit eines von den hervorzuhebenden Objekten ausgehenden Gefahrenpotentials zu gestalten, insbesondere auch Abhängig von deren Entfernung oder deren Relativgeschwindigkeit in Bezug auf das eigene Fahrzeug.

Gewinnbringend kann die Manipulation der Bilddaten in den Bildbereichen der ersten Art so erfolgt, dass die Hervorhebung dieser Bereiche in den dargestellten Bilddaten (1) in ihrer Wahrnehmbarkeit zeitlich variiert. Hierdurch kann beispielsweise erreicht werden, dass neu erkannten Objekten zugeordnete Bildbereiche erst nur schwach und dann mit fortschreitender Dauer der Erkennung deutlich hervorgehoben werden. Auf diese Weise wirken sich Erkennungsfehler bei der Objekterkennung innerhalb der von der Kamera aufgenommen Bilddaten nur unwesentlich aus, da die anfängliche schwache Hervorhebung von derartig falsch detektierten Objekten den Fahrzeugführer nicht unnötig ablenkt.

Generell ist es von Vorteil, wenn die Hervorhebung der Bildbereiche der ersten Art abhängig von Parametern des im Bildbereich enthaltenen Objekts (2,3,4,5) gewählt bzw. variiert wird. Dabei ist es beispielsweise denkbar diejenigen Parameter eines Objekts (2,3,4,5) heranzuziehen, welche dessen Entfernung, das von ihm ausgehende Gefahrenpotential oder dessen Objekttyp beschreiben. So wäre es denkbar Bildbereiche, in welchen sich Objekte abbilden, welche sich schnell auf das eigene Fahrzeug zu bewegen, mit Rottönen einzufärben. Oder Bildbereiche in denen sich weit entfernte Objekte abbilden könnten mit einer schwachen Färbung versehen werden. Auch könnten beispielsweise hervorzuhebende Bildbereiche mit Personen mit einem anderen Farbton als Bereiche mit Fahrzeugen gefärbt werden, um so bei einer intuitiven Objektwahrnehmung zu unterstützen.

Weiterhin ist es von Vorteil, wenn die Hervorhebung der Bildbereiche der ersten Art in Abhängigkeit von der Objekterkennung gewählt wird, wobei wenigstens ein Parameter ausgewertet wird, welcher die Sicherheit und/oder Qualität der Objekterkennung beschreibt. Der wenigstens eine Parameter wird von der Erkennereinheit bzw. dem Klassifikator mittels dem die Objekterkennung durchgeführt wird, geliefert. Beispielsweise liefert ein Klassifikator an seinen Ausgängen ein normiertes Maß, welches die Erkennungssicherheit bzw. -qualität beschreibt. Vorzugsweise wird in diesem Zusammenhang das Ausmaß der Hervorhebung mit zunehmender Erkennungssicherheit bzw. -qualität größer gewählt.

Auch ist es vorteilhaft, wenn die Hervorhebung der Bildbereiche der ersten Art auf einer Vergrößerung dieser Bildbereiche basiert. Ein im Bildbereich erster Art enthaltenes Objekt (2,3,4,5) wird somit vergrößert dargestellt, wie dies in gleicher Weise bei einer Betrachtung mittels einer Lupe der Fall ist. Dadurch können Objekte (2,3,4,5) auf besonders einfache Weise wahrgenommen werden. In diesem Zusammenhang besteht auch die Möglichkeit, dass entweder nur der jeweilige Bildbereich, welcher ein Objekt (2,3,4,5) enthält, oder aber der jeweilige Bildbereich der ersten Art und dessen zugeordnete(r) Umgebungsbereich(e) (2a,3a,4a) vergrößert dargestellt wird.

In einer gewinnbringenden Weise erfolgt die Hervorhebung von Bildbereichen der ersten Art mittels einer virtuellen Beleuchtungsquelle, womit die Objekte (2,3,4,5) beleuchtet werden. Derartige virtuelle Beleuchtungsquellen werden z.B. im Zusammenhang mit Grafikprogrammen standardmäßig eingesetzt, wobei neben der Art der Beleuchtungsquelle zusätzlich auch zahlreiche Beleuchtungsparameter ausgewählt werden können. Dabei sind die Heleuchtungsposition und/oder die Beleuchtungsrichtung frei wählbar, beispielsweise mittels einer Eingabe durch den Benutzer. Es ist auch möglich, dass der Lichtstrahl bzw. die Lichtkeule ansich dargestellt wird, welcher beispielsweise im Zusammenhang bei einer konventionellen Beleuchtungsquelle bei Nebel sichtbar ist. Hierdurch wird dem Benutzer durch den Lichtstrahl bzw. die Lichtkeule die Richtung zum.jeweiligen Objekt (2,3,4,5) hin angezeigt, wodurch die Objekte (2,3,4,5) auf besonders einfache Weise in den dargestellten Bildern erfasst werden können.

In einer weiteren gewinnbringenden Weise erfolgt die Hervorhebung der Bildbereiche der ersten Art derart, dass an Objekten (2,3,4,5) entstehende Schatten abgebildet werden. Durch die Beleuchtung der Objekte (2,3,4,5) mit einer virtuellen Beleuchtungsquelle entstehen in Abhängigkeit von der virtuellen Beleuchtungsposition Schatten im virtuellen 3D-Raum. Diese Schatten werden in vorteilhafter Weise in die 2D-Darstellung der Bilddaten (1) auf der Anzeigeeinheit projiziert somit entsteht bei der 2D-Darstellung ein Eindruck wie dies bei einer 3D-Darstellung der Fall ist.

Die Hervorhebung der Bildbereiche der ersten Art erfolgt bei einer bevorzugten Ausgestaltung der Erfindung derart, dass die Objekte (2,3,4,5) nur teilweise hervorgehoben werden. Beispielsweise erfolgt bei der Darstellung von Personen lediglich eine Hervorhebung im Bereich der Beine. Hierdurch wird die Darstellung insbesondere in komplexen Umgebungen vereinfacht und lässt sich dadurch deutlicher darstellen.

In besonderer Weise ist es sehr wohl denkbar, die Darstellung der Bildbereiche zweiter Art abhängig von der Erkennung eines im Bildbereich der ersten Art enthaltenen Objekts (2,3) zu gewählt bzw. variiert wird. Dabei ist es beispielsweise denkbar die Darstellung in Abhängigkeit von Parametern dieses erkannten Objekts (2,3) zu wählen bzw. zu variieren, welche dessen Entfernung, das von ihm ausgehende Gefahrenpotential oder dessen Objekttyp beschreiben.

Insbesondere sollte bei Erkennung eines Objektes (2,3) in einem ersten Bildbereich Darstellung des zweiten Bildbereiches abgedunkelt erfolgen. Dabei ist es besonders vorteilhaft, wenn diese Abdunklung in mehreren, insbesondere 2 oder 3, Stufen erfolgt. So kann die gestufte Abdunkelung insbesondere an einen Parameter gekoppelt erfolgen, der ein in einem ersten Bildbereich erkanntes Objekt (2,3) beschreibt, wie beispielsweise das von ihm ausgehende Gefahrenpotential.

Bewegt sich das mit der erfindungsgemäßen Bildanzeige versehene Fahrzeug entlang der Fahrbahn, so unterliegt dessen dynamisches Verhalten häufig relativ raschen Änderungen (Rütteln und Wackeln), insbesondere bedingt durch Fahrbahnunebenheiten. Verursacht durch die starre Kopplung zwischen Kamera und Fahrzeugkörper bewirken die raschen dynamischen Änderungen ein ,wackeln' der Bilddarstellung auf der Anzeige. Werden die von einer Kamera aufgenommen Bilddaten unverändert auf der Anzeige dargestellt, wird dieses ,Wackeln' nicht besonders deutlich wahrgenommen. Dann aber wenn in der Bilddarstellung Objekte oder ganze Objektbereiche hervorgehoben dargestellt werden, kann dies insbesondere bei der Aufhellung dieser Bereiche auf einer Anzeige im abgedunkelten Fahrzeuginnenraum auf den Fahrer äußerst störend wirken. Deshalb wird in einer vorteilhaften Ausgestaltung der Erfindung bei den hervorgehobenen Bildbereichen der ersten Art der den hervorzuhebenden Objekten (2,3,4,5) jeweils zugeordnete Umgebungsbereich (2a,3a,4a) in seiner Lage zu dem zugeordneten Objekt zeitlich so veränderlich gewählt wird, dass sich die Positionen der Bildbereiche in der Darstellung der Bilddaten (1) auf der Anzeige nur träge verändern.

Die Bildbereiche der ersten Art sind durch das darin befindliche Objekt (2,3,4,5) und den direkt daran anschließenden Umgebungsbereich (2a,3a,4a) definiert. Wenn nun in den Fällen, bei welchen die Objekterkennung in den von der Kamera erfassten Bilddaten im Rahmen einer Objektverfolgung ein hervorzuhebendes Objekt zeitweilig nicht mehr erkennt, würde dies zwangsläufig zur Aufgabe der hervorgehobenen Darstellung des entsprechenden Bildbereichs der ersten Art führen. Dies ist aber im Allgemeinen nicht wünschenswert, da insbesondere bei schlechten Lichtverhältnissen immer mit einer zeitweiligen Nicht-Erkennung eines an sich vorhandenen Objektes gerechnet werden muss. Ein hieraus resultierendes Aktivieren und Deaktivieren der Hervorhebung eines entsprechenden Bildbereichs der ersten Art würde aber äußerst störend auf den Betrachter wirken.

Deshalb ist es in einer besonders vorteilhaften Weiterbildung der Erfindung vorgesehen, dass dann wenn ein Bildbereich der ersten Art hervorgehoben in den Bilddaten (1) dargestellt wird, ein darin potentiell abgebildetes Objekt (2,3,4,5) durch die Objekterkennung aber nicht mehr erkannt werden kann, trotzdem eine hervorgehobenen Darstellung dieses Bildbereichs während einer gewissen Zeitdauer fortgeführt wird. Ist es der Objekterkennung zwischenzeitlich dann wieder möglich das Objekt wieder zu erkennen, resultiert dies in einer im Wesentlichen störungsfreien Fortsetzung der Hervorhebung. Der Betrachter wird einzig wahrnehmen, dass kurzzeitig in dem hervorgehobenen Bildbereich kein Objekt zu erkennen sein wird; dies ist aber weiter nicht störend, da das Objekt evtl. immer noch schemenhaft wahrnehmbar ist.

Dann wenn über einen definierten(längeren) Zeitraum ein ehemals erkanntes Objekt in den Bilddaten nicht wieder erkannt werden kann, bietet es sich an die Hervorhebung des zugeordneten Bildbereichs erster Art abzubrechen und diesen Bildbereich anschließend wie einen Bildbereich zweiter Art zu behandeln. Dabei wird vorzugsweise der Hervorhebung nicht abrupt unterbrochen sondern zeitlich variiert, so dass dieses als eine Art langsames Ausblenden des Bildbereichs wahrgenommen wird.

Besonders gewinnbringend wird die erfindungsgemäße Bildanzeige mit Mitteln zur Erzeugung akustischer oder haptischer Signale in Verbindung gebracht. Hierdurch wird es möglich neben einer optischen Hervorhebung von Bildbereichen auf relevante Objekte im Umfeld des Fahrzeuges hinzuweisen.

In vorteilhafter Weise eignet sich die Erfindung zur bei einem Fahrerassistenzsystem zur Verbesserung der Sicht eines Fahrzeugführers bei Nacht (Nachtsichtsystem), wozu zur Bildaufnahme bevorzugt eine im infraroten Wellenlängenbereich empfindliche Kamera verwendet wird. Anderseits ist sehr wohl auch ein gewinnbringender Einsatz im Rahmen eines Fahrerassistenzsystems zur Verbesserung zur verbesserten Wahrnehmung relevanter Information in Innenstadtszenarios. (Innenstadtassistent) denkbar, wobei hier insbesondere Ampelanlagen und/oder Verkehrszeichen als relevante Objekte hervorgehoben werden.

Beim Einsatz im Rahmen eines Fahrerassistenzsystems bietet es sich einerseits an die Bildanzeige als Headup-Display auszuführen, andererseits ist jedoch auch eine Einbringung des Display in den direkt vor den Fahrzeugführer befindlichen Armaturenbereich vorteilhaft, da der Fahrer zum Blick auf das Display nur kurz den Blick senken muss.

## Patentansprüche

1. Verfahren zur Bildanzeige,
bei welchem mittels einer Kamera Bilddaten aus dem Umfeld eines Fahrzeuges aufgenommen werden,
bei welchem mittels einer Objekterkennung Objekte (2,3,4,5) in den aufgenommenen Bilddaten erkannt werden,
und bei welchem die Bilddaten (1) zumindest teilweise auf einer Anzeige dargestellt werden,
wobei in den Bilddaten (1) die erkannten Objekte (2,3,4,5) zumindest teilweise hervorgehoben werden, wobei die Hervorhebung der erkannten Objekte (2,3,4,5) dergestalt erfolgt, dass die dargestellten Bilddaten (1) in zwei Arten von Bereichen eingeteilt werden,
**dadurch gekennzeichnet,**
**dass** die erste Art von Bereichen die erkannten und hervorzuhebenden Objekte (2,3,4,5) und einen sich jeweils entsprechend direkt daran anschließenden Umgebungsbereich (2a, 3a, 4a) umfassen,
wobei die zweite Art von Bereichen diejenigen Bilddaten (1) umfasst, welche nicht der ersten Art von Bereichen zugeordnet wurden,
wobei die Bilddaten der beiden Arten von Bereichen in unterschiedlicher Weise verarbeitet werden und wobei die Hervorhebung von Bildbereichen der ersten
Art mittels einer virtuellen Beleuchtungsquelle erfolgt, womit Objekte (2, 3, 4, 5) beleuchtet werden.

2. Verfahren nach Patenanspruch 1,
**dadurch gekennzeichnet,**
**dass** im Rahmen der Verarbeitung der Bilddaten die Bildbereiche der ersten Art aufgehellt werden.

3. Verfahren nach einem der vorhergehenden Patentansprüche,
**dadurch gekennzeichnet,**
**dass** im Rahmen der Verarbeitung der Bilddaten die Bildbereiche der zweiten Art abgedunkelt werden oder durch schematische bzw. symbolische Darstellungen ersetzt werden.

4. Verfahren nach einem der vorhergehenden Patentansprüche,
**dadurch gekennzeichnet,**
**dass** im Rahmen der Verarbeitung der Bilddaten in Bildbereichen der zweiten Art enthaltene Informationen zumindest teilweise reduziert werden.

5. Verfahren nach einem der vorhergehenden Patentansprüche,
**dadurch gekennzeichnet,**
**dass** die Bilddaten der Bildbereiche der zweiten Art in ihrer Farbe verarbeitet werden,
und/oder dass sie in ihren Farb- oder Helligkeitsverläufen mit weichem Übergang, ohne harte Grenzen zu den Bildbereichen der ersten Art angezeigt werden.

6. Verfahren nach einem der vorhergehenden Patentansprüche,
**dadurch gekennzeichnet,**
**dass** die Bilddaten der zweiten Art von Bereichen, welche erkannten Objekten (2,3,4,5) zuzuordnen sind, einer dritten Art von Bereichen zugeordnet werden,
und **dass** die Bilddaten dieser dritten Art von Bereichen unterschiedlich zu den Bilddaten der zweiten Art von Bereichen verarbeitet werden.

7. Verfahren nach Patenanspruch 6,
**dadurch gekennzeichnet,**
**dass** die Bilddaten der Bildbereiche der dritten Art keiner Verarbeitung unterzogen werden.

8. Verfahren nach Patentanspruch 6,
**dadurch gekennzeichnet,**
**dass** die Bilddaten der Bildbereiche der dritten Art in ihrer Farbe verarbeitet werden,
und/oder dass sie in ihren Farb- oder Helligkeitsverläufen mit weichem Übergang, ohne harte Grenzen zu den Bildbereichen der ersten Art und/oder der zweiten Art angezeigt werden.

9. Verfahren nach einem der vorhergehenden Patentansprüche,
**dadurch gekennzeichnet,**
**dass** im Rahmen der Verarbeitung der Bilddaten die Bilddaten der Bereiche erster Art durch die entsprechenden Bilddaten eines anderen Sensors oder eines anderen Sensorstroms ersetzt werden.

10. Verfahren nach einem der vorhergehenden Patentansprüche,
**dadurch gekennzeichnet,**
**dass** in den Bildbereichen der ersten Art den Objekten (2,3,4,5) jeweils zugeordnete Umgebungsbereich (2a,3a,4a) in seinen Umriss elliptisch oder kreisförmig oder der Objektform angepasst gewählt wird.

11. Verfahren nach einem der vorhergehenden Patentansprüche,
**dadurch gekennzeichnet,**
**dass** die Bilddaten der Bildbereiche der ersten Art in ihrer Farbe verarbeitet werden,
und/oder dass sie in ihren Farb- oder Helligkeitsverläufen mit weichem Übergang, ohne harte Grenzen zu den Bildbereichen der zweiten Art angezeigt werden.

12. Verfahren nach einem der vorhergehenden Patentansprüche,
**dadurch gekennzeichnet,**
**dass** die Bilddaten der Bildbereiche der ersten Art blinkend oder pulsierend dargestellt werden.

13. Verfahren nach einem der vorhergehenden Patentansprüche,
**dadurch gekennzeichnet,**
**dass** die Verarbeitung der Bilddaten in den Bildbereichen der ersten Art so erfolgt,
**dass** die Hervorhebung dieser Bereiche in den dargestellten Bilddaten (1) in ihrer Wahrnehmbarkeit zeitlich variiert.

14. Verfahren nach Patenanspruch 10,
**dadurch gekennzeichnet,**
**dass** die zeitliche Variation so erfolgt, dass die Wahrnehmbarkeit der Hervorhebungen mit der fortschreitenden Dauer der Erkennung des in dem Bildbereich enthalten Objektes (2, 3, 4, 5) zunimmt.

15. Verfahren nach einem der vorhergehenden Patentansprüche,
**dadurch gekennzeichnet,**
**dass** die Hervorhebung der Bildbereiche der ersten Art abhängig von Parametern des im Bildbereich enthaltenen Objekts (2,3,4,5) gewählt bzw. variiert wird,
wobei die Parameter die Entfernung des Objekts (2,3,4,5) oder das von ihm ausgehende Gefahrenpotential oder dessen Objekttyp beschreiben.

16. Verfahren nach einem der vorhergehenden Patentansprüche,
**dadurch gekennzeichnet,**
**dass** die Hervorhebung der Bildbereiche der ersten Art in Abhängigkeit von der Objekterkennung gewählt wird,
wobei wenigstens ein Parameter ausgewertet wird, welcher die Sicherheit oder Qualität der Objekterkennung beschreibt.

17. Verfahren nach einem der vorhergehenden Patentansprüche,
**dadurch gekennzeichnet,**
**dass** die Hervorhebung der Bildbereiche der ersten Art auf einer Vergrößerung dieser Bildbereiche basiert.

18. Verfahren nach Patentanspruch 17,
**dadurch gekennzeichnet,**
**dass** die Hervorhebung der Bildbereiche der ersten Art derart erfolgt, dass an Objekten (2,3,4,5) entstehende Schatten abgebildet werden.

19. Verfahren nach einem der vorhergehenden Patentansprüche,
**dadurch gekennzeichnet,**
**dass** die Hervorhebung der Bildbereiche der ersten Art derart erfolgt, dass die Objekte (2,3,4,5) nur teilweise hervorgehoben werden.

20. Verfahren nach einem der vorhergehenden Patentansprüche,
**dadurch gekennzeichnet,**
**dass** die Darstellung der Bildbereiche der zweiten Art in Abhängigkeit der Erkennung von Objekten in Bildbereichen erster Art gewählt oder variiert wird.

21. Verfahren nach Patentanspruch 20,
**dadurch gekennzeichnet,**
**dass** die Bilddaten der Bildbereiche der zweiten Art, abgedunkelt dargestellt werden.

22. Verfahren nach Patentanspruch 21,
**dadurch gekennzeichnet,**
**dass** die Abdunklung, in Abhängigkeit eines Parameters des im ersten Bildbereich erkannten Objektes, in mehreren Stufen erfolgt.

23. Verfahren nach einem der vorhergehenden Patentansprüche,
**dadurch gekennzeichnet,**
**dass** der in den Bildbereichen der ersten Art den jeweiligen Objekten (2,3,4,5) zuzuordnende Umgebungsbereich (2a, 3a, 9a) in seiner Lage zu dem zugeordneten Objekt zeitlich so veränderlich gewählt wird,
**dass** sich die Positionen der Bildbereiche in der Darstellung der Bilddaten (1) auf der Anzeige nur träge verändern.

24. Verfahren nach einem der vorhergehenden Patentansprüche,
**dadurch gekennzeichnet,**
**dass** dann wenn ein Bildbereich der ersten Art hervorgehoben in den Bilddaten (1) dargestellt wird, ein darin potentiell abgebildetes Objekt (2,3,4,5) durch die Objekterkennung nicht mehr erkannt werden kann,
eine hervorgehobenen Darstellung dieses Bildbereichs während einer gewissen Zeitdauer fortgeführt wird.

25. Verfahren nach Patentanspruch 24,
**dadurch gekennzeichnet,**
**dass** dann, wenn nach Ablauf der Zeitdauer die Objekterkennung immer noch kein Objekt (2,3,4,5) in dem Bildbereich erkennen kann, die Hervorhebung des Bildbereichs abgebrochen wird, und der Bildbereich anschließend wie ein Bildbereich zweiter Art behandelt wird.

26. Verfahren nach Patentanspruch 25,
**dadurch gekennzeichnet,**
**dass** der Abbruch der Hervorhebung mit zeitlicher Variation erfolgt.

27. Bildanzeige,
umfassend eine Kamera zur Aufnahme von Bilddaten aus dem Umfeld eines Fahrzeuges,
umfassend eine Objekterkennung zur Erkennung von Objekten (2,3,4,5) in den aufgenommenen Bilddaten,
und umfassend eine Anzeige zur Darstellung zumindest von Teilen der aufgenommenen Bilddaten,
wobei eine Bildverarbeitungseinrichtung vorgesehen ist, welche die Bilddaten so verarbeitet, dass sie zumindest teilweise hervorgehoben auf der Anzeige dargestellt werden,
dass die Bildanzeige ein Mittel umfasst um die Bilddaten zumindest in zwei Arten von Bereichen einzuteilen, **dadurch gekennzeichnet,**
**dass** die erste Art von Bereichen die erkannten und hervorzuhebenden Objekte (2,3,4,5) und den sich jeweils entsprechend daran anschließenden Umgebungsbereich (2a,3a,4a) umfasst,
und wobei die zweite Art von Bereichen diejenigen Bilddaten (1) umfasst, welche nicht der ersten Art von Bereichen zugeordnet wurden
und wobei die Bildverarbeitungsvorrichtung derart ausgestaltet ist, dass diese zur Hervorhebung von Bildbereichen der ersten Art eine virtuelle Beleuchtungseinheit umfasst, womit Objekte (2,3,4,5) beleuchtet werden.

28. Bildanzeige nach Patentanspruch 27,
**dadurch gekennzeichnet,**
**dass** die Kamera Bilddaten aus dem infra-roten Wellenlängenbereich erfasst.

29. Bildanzeige nach Patentanspruch 27,
**dadurch gekennzeichnet,**
**dass** die Kamera Bilddaten aus gewichteten Anteilen des sichtbaren und des infra-roten Wellenlängenbereichs erfasst.

30. Bildanzeige nach einem der Patentansprüche 27 bis 29,
**dadurch gekennzeichnet,**
**dass** es sich bei der Bildanzeige um ein im Armaturenbereich des Fahrzeuges befindliches Display handelt.

31. Bildanzeige nach einem der Patentansprüche 27 bis 30,
**dadurch gekennzeichnet,**
**dass** die Bildanzeige mit Mitteln zur Erzeugung akustischer oder haptischer Signale in Verbindung steht, mittels der neben einer optischen Hervorhebung von Bildbereichen durch weitere Signalisierung auf das vorhanden sein relevanter Objekte im Umfeld des Fahrzeuges hingewiesen werden kann.

32. Verwendung der Bildanzeige oder des Verfahrens zur Bildanzeige nach einem der vorhergehenden Patentansprüche als Fahrerassistenzsystem zur Verbesserung der Sicht eines Fahrzeugführers bei Nacht (Nachtsichtsystem).

33. Verwendung der Bildanzeige oder des Verfahrens zur Bildanzeige nach einem der vorhergehenden Patentansprüche als Fahrerassistenzsystem zur Verbesserung zur verbesserten Wahrnehmung relevanter Information in Innenstädtszenarios (Innenstadtassistent).

## Claims

1. Image display method,
wherein image data are recorded from the surroundings of a vehicle by means of a camera,
wherein objects (2, 3, 4, 5) in the recorded image data are detected by means of an object detection system,
and wherein the image data (1) are at least partially displayed on a display,
wherein the objects (2, 3, 4, 5) detected in the image data (1) are at least partially highlighted,
wherein the detected objects (2, 3, 4, 5) are highlighted in such a way that the displayed image data (1) are divided into two types of areas, **characterised in that**
the first type of areas includes the detected and highlighted objects (2, 3, 4, 5) and a respective immediately adjoining surrounding area (2a, 3a, 4a),
wherein the second type of areas includes the image data (1) which are not assigned to the first type of areas,
wherein the image data of the two types of areas are processed in different ways,
and wherein image areas of the first type are highlighted by means of a virtual illumination source which illuminates objects (2, 3, 4, 5).

2. Method according to patent claim 1,
**characterised in that**
while the image data are processed, the image areas of the first type are lit up.

3. Method according to any of the preceding patent claims,
**characterised in that**
while the image data are processed, the image areas of the second type are dimmed or replaced by diagrammatic or symbolic representations.

4. Method according to any of the preceding patent claims,
**characterised in that**
while the image data are processed, the information contained in image areas of the second type is at least partially reduced.

5. Method according to any of the preceding patent claims,
**characterised in that**
the image data of the image areas of the second type are processed in their colour,
and/or **in that** they are displayed in their colour blending or brightness with a soft transition, without hard boundaries against the image areas of the first type.

6. Method according to any of the preceding patent claims,
**characterised in that**
the image data of the second type of areas which are to be assigned to detected objects (2, 3, 4, 5) are assigned to a third type of areas, and **in that** the image data of this third type of areas are processed in a way which differs from the image data of the second type of areas.

7. Method according to patent claim 6,
**characterised in that**
the image data of the third type of areas are not subjected to any processing.

8. Method according to patent claim 6,
**characterised in that**
the image data of the third type of areas are processed in their colour, and/or **in that** they are displayed in their colour blending or brightness with a soft transition, without hard boundaries against the image areas of the first type and/or of the second type.

9. Method according to any of the preceding patent claims,
**characterised in that**
while the image data are processed, the image data of the areas of the first type are replaced by the corresponding image data of another sensor or another sensor stream.

10. Method according to any of the preceding patent claims,
**characterised in that**
in the image areas of the first type, the surrounding area (2a, 3a, 4a) assigned to each object (2, 3, 4, 5) is given an elliptical or circular contour or a contour matching the shape of the respective object.

11. Method according to any of the preceding patent claims,
**characterised in that**
the image data of the image areas of the first type are processed in their colour,
and/or **in that** they are displayed in their colour blending or brightness with a soft transition, without hard boundaries against the image areas of the second type.

12. Method according to any of the preceding patent claims,
**characterised in that**
the image data of the image areas of the first type are displayed in a flashing or pulsing style.

13. Method according to any of the preceding patent claims,
**characterised in that**
the image data in the image areas of the first type are processed in such a way
that the highlighting of these areas in the displayed image data (1) varies with time in its perceptibility.

14. Method according to patent claim 10,
**characterised in that**
the highlighting varies with time in such a way that the perceptibility of the highlighting increases with the duration of the detection of the object (2, 3, 4, 5) contained in the image area.

15. Method according to any of the preceding patent claims,
**characterised in that**
the highlighting of the image areas of the first type is selected or varied in dependence on parameters of the object (2, 3, 4, 5) contained in the image area,
wherein the parameters describe the distance of the object (2, 3, 4, 5) or the hazard potential of the object or the object type.

16. Method according to any of the preceding patent claims,
**characterised in that**
the highlighting of the image areas of the first type is selected in dependence on the object detection system,
wherein at least one parameter describing the security or quality of the object detection is evaluated.

17. Method according to any of the preceding patent claims,
**characterised in that**
the highlighting of the image areas of the first type is based on an enlargement of these image areas.

18. Method according to patent claim 17,
**characterised in that**
the image areas of the first type are highlighted in such a way that shadows arising at objects (2, 3, 4, 5) are displayed.

19. Method according to any of the preceding patent claims,
**characterised in that**
the image areas of the first type are highlighted in such a way that the objects (2, 3, 4, 5) are highlighted only partially.

20. Method according to any of the preceding patent claims,
**characterised in that**
the display of the image areas of the second type is selected or varied in dependence on the detection of objects in image areas of the first type.

21. Method according to patent claim 20,
**characterised in that**
the image data of the image areas of the second type are displayed in a dimmed form.

22. Method according to patent claim 21,
**characterised in that**
the image data are dimmed in several stages in dependence on a parameter of the object detected in the first image area.

23. Method according to any of the preceding patent claims,
**characterised in that**
the surrounding area (2a, 3a, 4a) assigned to the respective objects (2, 3, 4, 5) in the image areas of the first type is selected to be variable in time in its position relative to the assigned object in such a way that the positions of the image areas change only slowly in the display of the image data (1) on the display.

24. Method according to any of the preceding patent claims,
**characterised in that**
if an image area of the first type is displayed highlighted in the image data (1) and an object (2, 3, 4, 5) potentially shown therein can no longer be detected by the object detection system,
a highlighted display of this image area is continued for a certain period of time.

25. Method according to patent claim 24,
**characterised in that**
if after this period of time the object detection system still cannot detect an object (2, 3, 4, 5) in the image area, the highlighting of the image area is cancelled and the image area is thereafter treated like an image area of the second type.

26. Method according to patent claim 25,
**characterised in that**
the cancellation of the highlighting is varied in time.

27. Image display,
comprising a camera for recording image data from the surroundings of a vehicle,
comprising an object detection system for the detection of objects (2, 3, 4, 5) in the recorded image data,
and comprising a display for displaying at least parts of the recorded image data,
wherein an image processing device is provided which processes the image data in such a way that they appear on the display in an at least partially highlighted form,
wherein the image display includes means for dividing the image data into at least two types of areas,
**characterised in that**
the first type of areas comprises the detected objects (2, 3, 4, 5) to be highlighted and in each case the adjoining surrounding area (2a, 3a, 4a),
wherein the second type of areas comprises those image data (1) which were not assigned to the first type of areas,
and wherein the image processing device is designed such that it comprises a virtual illumination unit by means of which objects (2, 3, 4, 5) are illuminated in order to highlight image areas of the first type.

28. Image display according to patent claim 27,
**characterised in that**
the camera records image data from the infrared wavelength range.

29. Image display according to patent claim 27,
**characterised in that**
the camera records image data from weighted components of the visible and the infrared wavelength ranges.

30. Image display according to any of patent claims 27 to 29,
**characterised in that**
the image display is a display located in the instrument panel area of the vehicle.

31. Image display according to any of patent claims 27 to 30,
**characterised in that**
the image display is connected to means for generating acoustic or haptic signals by means of which the presence of relevant objects in the surroundings of the vehicle can be indicated by further signalling in addition to visual highlighting of image areas.

32. Use of the image display or of the image display method according to any of the preceding patent claims as a driver assistance system for improving the vision of a driver in the night (night vision).

33. Use of the image display or of the image display method according to any of the preceding patent claims as a driver assistance system for improving the perception of relevant information in inner city situations (inner city assistance).

## Revendications

1. Procédé d'affichage d'images selon lequel des données d'image de l'environnement d'un véhicule sont acquises au moyen d'une caméra et des objets (2, 3, 4, 5) sont reconnus au moyen d'un dispositif de reconnaissance d'objet dans les données d'image acquises, et selon lequel les données d'image (1) sont au moins partiellement représentées sur un dispositif d'affichage, les objets (2, 3, 4, 5) reconnus au moyen d'un dispositif de reconnaissance d'objet étant au moins partiellement mis en valeur dans les données d'image, la mise en valeur des objets reconnus (2, 3, 4, 5) s'effectuant ici de telle sorte que les données d'image (1) représentées soient divisées en deux types de zones, **caractérisé en ce que** le premier type de zones comprend les objets (2, 3, 4, 5) reconnus et devant être mis en valeur et une zone environnante (2a, 3a,4a) qui se rattache à chaque fois directement à celle-ci en conséquence, le deuxième type de zones comprend les données d'image (1) qui n'ont pas été affectées au premier type de zones, les données d'image des deux types de zones étant traitées de manière différente et la mise en valeur des zones d'image du premier type s'effectuant au moyen d'une source d'éclairage virtuelle avec laquelle les objets (2, 3, 4, 5) sont éclairés.

2. Procédé selon la revendication 1, **caractérisé en ce que** dans le cadre du traitement des données d'image, les zones d'image du premier type sont éclaircies.

3. Procédé selon l'une quelconque des revendications précédentes, **caractérisé en ce que** dans le cadre du traitement des données d'image, les zones d'images du deuxième type sont obscurcies ou remplacées systématiquement par des représentations schématiques ou symboliques.

4. Procédé selon l'une quelconque des revendications précédentes, **caractérisé en ce que** dans le cadre du traitement des données d'image dans des zones d'image du deuxième type les informations obtenues sont au moins partiellement réduites.

5. Procédé selon l'une quelconque des revendications précédentes, **caractérisé en ce que** les données d'image des zones d'image du deuxième type sont traitées dans leur couleur, et / ou **en ce qu'**elles sont affichées dans leurs gradients de couleur ou de luminosité par transition douce, sans limites fixes avec les zones d'image du premier type.

6. Procédé selon l'une quelconque des revendications précédentes, **caractérisé en ce que** les données d'image du deuxième type de zones qui doivent être affectées à des objets reconnus (2, 3, 4, 5) sont affectées à un troisième type de zones et **en ce que** les données d'image de ce troisième type de zones sont traitées de manière différente des données d'image du deuxième type de zones.

7. Procédé selon la revendication 6, **caractérisé en ce que** les données d'image du troisième type de zones ne sont soumises à aucun traitement.

8. Procédé selon la revendication 6, **caractérisé en ce que** les données d'image des zones d'image du troisième type sont traités dans leur couleur, et / ou **en ce qu'**elles sont affichées dans leurs gradients de couleur ou de luminosité par transition douce, sans limites fixes avec les zones d'image du premier type et / ou du deuxième type.

9. Procédé selon l'une quelconque des revendications précédentes, **caractérisé en ce que** dans le cadre du traitement des données d'image, les données d'image des zones du premier type sont remplacées par les données d'image correspondantes d'un autre capteur ou d'un autre courant de capteur.

10. Procédé selon l'une quelconque des revendications précédentes, **caractérisé en ce que** dans les zones d'image du premier type, chaque zone environnante affectée aux objets (2, 3, 4, 5) est sélectionnée de manière appropriée dans son contour de façon elliptique, circulaire ou selon la forme de l'objet.

11. Procédé selon l'une quelconque des revendications précédentes, **caractérisé en ce que** les données d'image des zones d'image du premier type sont traitées dans leur couleur, et / ou **en ce qu'**elles sont affichées dans leurs gradients de couleur ou de luminosité par transition douce, sans limites fixes avec les zones d'image du deuxième type.

12. Procédé selon l'une quelconque des revendications précédentes, **caractérisé en ce que** les données d'image des zones d'image du premier type sont représentées par clignotement ou par pulsation.

13. Procédé selon l'une quelconque des revendications précédentes, **caractérisé en ce que** le traitement des données d'image dans les zones d'image du premier type s'effectue de manière telle que la perception de la mise en valeur de ces zones dans les données d'image (1) représentées varie dans le temps.

14. Procédé selon la revendication 10, **caractérisé en ce que** la variation temporelle s'effectue de manière telle que la perception des mises en valeur augmente avec la durée croissante de la reconnaissance des objets (2, 3, 4, 5) contenus dans la zone d'image.

15. Procédé selon l'une quelconque des revendications précédentes, **caractérisé en ce que** la mise en valeur des zones d'image du premier type est sélectionnée ou varie en fonction des paramètres de l'objet (2, 3, 4, 5) contenu dans la zone d'image, les paramètres décrivant l'éloignement de l'objet (2, 3, 4, 5) ou le danger potentiel émanant de celui-ci ou son type.

16. Procédé selon l'une quelconque des revendications précédentes, **caractérisé en ce que** la mise en valeur des zones d'image du premier type est sélectionnée de la reconnaissance d'objet, au moins un paramètre, qui décrit la sécurité ou la qualité de la reconnaissance d'objet, étant évalué.

17. Procédé selon l'une quelconque des revendications précédentes, **caractérisé en ce que** la mise en valeur des zones d'image du premier type se base sur un agrandissement des zones d'image.

18. Procédé selon la revendication 17, **caractérisé en ce que** la mise en valeur des zones d'image du premier type s'effectue de telle sorte que les ombres générées sur les objets (2, 3, 4, 5) sont représentées.

19. Procédé selon l'une quelconque des revendications précédentes, **caractérisé en ce que** la mise en valeur des zones d'image du premier type s'effectue de telle sorte que les objets (2, 3, 4, 5) ne sont mis en valeur que partiellement.

20. Procédé selon l'une quelconque des revendications précédentes, **caractérisé en ce que** la représentation des zones d'image du deuxième type est sélectionnée ou varie en fonction de la reconnaissance d'objets dans des zones d'image du premier type.

21. Procédé selon la revendication 20, **caractérisé en ce que** les données d'image des zones d'image du deuxième type sont obscurcies.

22. Procédé selon la revendication 21, **caractérisé en ce que** l'obscurcissement s'effectue en plusieurs étapes en fonction d'un paramètre de la première zone d'image de l'objet reconnu.

23. Procédé selon l'une quelconque des revendications précédentes, **caractérisé en ce que** la zone environnante (2a,3a,4a) devant être affectée à chacun des objets (2, 3, 4, 5) dans les zones d'image du premier type est sélectionnée dans sa position par rapport à l'objet associé de manière si variable dans le temps que les positions des zones d'image ne sont modifiées que lentement dans la représentation des données d'image (1) sur l'affichage.

24. Procédé selon l'une quelconque des revendications précédentes, **caractérisé en ce qu'**au cas où une zone d'image du premier type est mise en valeur dans les données d'image (1), un objet potentiellement représenté (2, 3, 4, 5) dans celle-ci ne peut plus être reconnu par le dispositif de reconnaissance d'objet, une représentation mise en valeur de cette zone d'image est poursuivie pendant une certaine durée.

25. Procédé selon la revendication 24, **caractérisé en ce qu'**au cas où après l'écoulement de la durée, le dispositif de reconnaissance d'objet n'a pu reconnaître aucun objet (2, 3, 4, 5) dans la zone d'image, la mise en valeur de la zone d'image est interrompue et la zone d'image est traitée ensuite comme une zone d'image du deuxième type.

26. Procédé selon la revendication 25, **caractérisé en ce que** l'interruption de la mise en valeur varie dans le temps.

27. Affichage d'images, comprenant une caméra pour l'acquisition de données d'image de l'environnement d'un véhicule, comprenant un dispositif de reconnaissance d'objet pour reconnaître des objets (2, 3, 4, 5) dans les données d'image acquises, et comprenant un affichage pour représenter au moins des parties des données d'image acquises, un dispositif de traitement d'image étant destiné à traiter les données d'image de telle sorte qu'elles puissent être mises en valeur au moins partiellement sur l'affichage, que l'affichage d'image comprenne un moyen permettant de classer les données d'image au moins en deux types de zones, que le premier type de zones comprenne les objets (2, 3, 4, 5) reconnus et mis en valeur et une zone environnante (2a,3a,4a) qui se rattache à chaque fois à celle-ci en conséquence, et le deuxième type de zones comprenant ces données d'image (1) qui n'ont pas été affectées au premier type de zones et le dispositif de traitement d'image étant conçu de telle manière qu'il comprenne une unité d'éclairage virtuelle pour la mise en valeur des zones d'image du premier type laquelle permet d'éclairer les objets (2, 3, 4, 5).

28. Affichage d'images selon la revendication 27, **caractérisé en ce que** la caméra comprend des données d'image dans la gamme des longueurs d'onde infrarouges.

29. Affichage selon la revendication 27, **caractérisé en ce que** la caméra comprend des données d'image dans des parties pondérées de la gamme des longueurs d'onde visible ou infrarouge.

30. Affichage selon les revendications 27 à 29, **caractérisé en ce que** l'affichage d'image est un écran se trouvant dans la zone du tableau de bord du véhicule.

31. Affichage selon l'une quelconque des revendications 27 à 30, **caractérisé en ce que** l'affichage d'image est en liaison avec des moyens pour générer des signaux acoustiques ou haptiques, lequel permet, en plus d'une mise en valeur optique des zones d'image, d'indiquer par une autre signalisation la présente d'objets importants dans l'environnement du véhicule.

32. Utilisation de l'affichage d'images ou du procédé d'affichage d'images selon l'une quelconque des revendications précédentes en tant que système d'assistance à la conduite pour améliorer la vision nocturne d'un conducteur de véhicule (système de vision nocturne).

33. Utilisation de l'affichage d'images ou du procédé d'affichage d'images selon l'une quelconque des revendications précédentes en tant que système d'assistance à la conduite pour améliorer la perception améliorée d'information importante dans des scénarios en centre-ville (assistance en centre-ville).
